# EUROPÄISCHE PATENTANMELDUNG

(11) **EP 1 779 955 A1**
(43) Veröffentlichungstag der Anmeldung: **02.05.2007**
(21) Anmeldenummer: 06004538.2
(22) Anmeldetag: 06.03.2006
(51) Int. Cl.: B23K 1/20, B08B 7/00, F01D 5/00

(54) **FIC-Reinigungsverfahren von Thermoermüdungsrissen in Nickel-Superlegierungen mit mindestens 10 % Chromanteil**

(30) Priorität: 26.10.2005 DE 102005051310
(71) Anmelder: SIEMENS AKTIENGESELLSCHAFT, 80333 München (DE)
(72) Erfinder: Heinecke, Brigitte, 45468 Mühlheim an der Ruhr (DE); Ott, Michael, 45478 Mülheim an der Ruhr (DE)

(57) **Zusammenfassung**

Die Erfindung betrifft ein Verfahren zur Reinigung von mit Oxiden verschmutzte Risse aufweisenden Bauteilen, insbesondere von Gasturbinenteilen, bei dem die zu reinigenden Bauteile unter Temperatureinwirkung in einer Reinigungskammer mit einem Reinigungsgas beaufschlagt werden, das gasförmige Halogenverbindungen enthält, die unter Bildung von Halogenidionen dissoziieren, dadurch gekennzeichnet, dass ein Reinigungsgas verwendet wird, das zu 18 bis 30 vol% einen Halogenwasserstoff enthält.

## Beschreibung

Die vorliegende Erfindung betrifft ein Verfahren zur Reinigung von mit Oxiden verschmutzte Risse aufweisenden Bauteilen, insbesondere von Gasturbinenteilen, bei dem die zu reinigenden Bauteile unter Temperatureinwirkung in einer Reinigungskammer mit einem Reinigungsgas beaufschlagt werden, das gasförmige Halogenverbindungen enthält, die unter Bildung von Halogenidionen dissoziieren

Gasturbinenbauteile und insbesondere die Turbinenschaufeln sind im Betrieb aufgrund der vorherrschenden hohen Temperaturen und zyklischen Beanspruchungen starken Belastungen ausgesetzt, die nicht selten in der Bildung von Thermoermüdungsrissen resultieren. Um diese Risse mit bekannten Lötverfahren reparieren zu können, müssen zunächst Oxidprodukte beseitigt werden, welche sich aufgrund des Hochtemperaturbetriebs unter oxidierenden Bedingungen in den Rissen bilden können. Ein Reinigungsverfahren zum Entfernen solcher Oxide aus Rissen ist die so genannte Fluoridionenreinigung (FIC), wie sie beispielsweise in der DE 28 10 598 C3 beschrieben ist. Bei diesem Reinigungsverfahren wird das zu reinigende Bauteil in einer Reinigungskammer bei einer Temperatur von ca. 1000° einer Reinigungsgasatmosphäre ausgesetzt, das gasförmige Fluorverbindungen enthält, die aufgrund der vorherrschenden Temperaturen unter Bildung von Fluordionen dissoziieren, welche wiederum geeignet sind, die in den Rissen vorhandenen Oxide zu reduzieren. Die bekannte Fluoridionenreinigung ist allerdings nur unzureichend in der Lage, Risse in nickelbasierten Superlegierungen (NBS) mit einem hohen Chromanteil von mehr als 10 Gew% zu reinigen, da die vorliegenden Oxide einerseits dicht gepackt sind und damit dem Reaktionsgas nur eine geringe Angriffsfläche bieten und andererseits als Metallfluorverbindungen schwer flüchtig sind und daher nur schwer aus der Reinigungskammer entfernt werden können.

Aufgabe der vorliegenden Erfindung ist es daher, ein Reinigungsverfahren der eingangs genannten Art anzugeben, mit dem mit Oxiden verschmutzte Risse zuverlässig gereinigt werden können.

Diese Aufgabe ist erfindungsgemäß dadurch gelöst, dass ein Reinigungsgas verwendet wird, das zu 18 bis 30 vol% einen Halogenwasserstoff insbesondere in der Form von Fluorwasserstoff enthält. Es hat sich gezeigt, dass sich Risse in Bauteilen zuverlässig reinigen lassen, wenn das Reinigungsgas einen Halogenwasserstoff in dem angegebenen Bereich enthält. Dies gilt insbesondere für Bauteile aus chromhaltigen Legierungen, die einen Chromgehalt von wenigstens 10 Gew% aufweisen. Damit wird eine optimale Voraussetzung für eine vollständige Benetzung der Rissoberfläche und Verfüllung des Risses mit Hochtemperaturloten geschaffen.

Gemäß einer Ausführungsform der Erfindung ist vorgesehen, dass das Reinigungsgas ein Gemisch aus dem Halogenwasserstoff und einem reduzierend wirkenden Gas, insbesondere Wasserstoff, enthält oder daraus besteht. Hierbei unterstützt das reduzierend wirkende Gas die Auflösung der die Risse verschmutzenden Oxide und damit den Reinigungsprozess. Es hat sich herausgestellt, dass das erfindungsgemäße Verfahren besonders wirksam ist, wenn die Risse bei einer Temperatur 980°C bis 1100°C mit dem Reinigungsgas beaufschlagt werden.

In Ausbildung der Erfindung ist vorgesehen, dass das Reinigungsgas in mehreren Reinigungszyklen angewendet wird, die von Spülzyklen unterbrochen werden, wobei die Risse in den Spülzyklen mit einem nicht oxidierenden und insbesondere reduzierend wirkenden Spülgas wie beispielsweise Wasserstoff beaufschlagt werden, um die sich bilden Metallhalogenverbindungen aus der Reinigungskammer zu entfernen. Der Spülvorgang kann dadurch unterstützt werden, dass die Reinigungskammer während der Spülzyklen, welche in bevorzugter Weise 2 bis 10 Minuten dauern, abgepumpt wird. Gute Ergebnisse werden erzielt, wenn drei bis zehn Spülzyklen durchgeführt werden.

Gemäß einer Ausführungsform der Erfindung ist vorgesehen, dass jeder Reinigungszyklus 10 bis 60 Minuten dauert, wobei die Reinigungszyklen in bevorzugter Weise gleich lang sind. Außerdem sollte nach dem letzten Reinigungszyklus ein Spülzyklus erfolgen, um zu gewährleisten, dass die gebildeten Metallhalogene vollständig aus der Reinigungskammer entfernt sind.

Nach der Reinigungsbehandlung kann das Bauteil im Vakuum geglüht werden, wobei das Glühen in bevorzugter Weise bei der γ-Lösungsglühtemperatur des für das Bauteil verwendeten Werkstoffs erfolgt und in bevorzugter Weise mindestens zwei Stunden dauert. Die Glühung dient der Reinigung des Bauteiles von Reaktionsprodukten.

In an sich bekannter Weise kann der erfindungsgemäßen Reinigungsbehandlung eine Vorreinigung in einem Salzbad vorausgehen, vorzugsweise Durferrit RS DGS. Alternativ oder zusätzlich ist auch eine Vorreinigung in einem Säurebad oder eine Ultraschallreinigung möglich. Die Vorbehandlung hat den Zweck, leicht zugängliche Oxidbeläge aufzulösen und so die Bauteiloberfläche einschließlich des leicht zugänglichen Rissanfangsbereiches von Oxiden zu befreien, bevor die tiefer liegenden Bereiche durch das Reinigungsgas in der Reinigungskammer gereinigt werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: in schematischer Weise den Ablauf eines Verfahrens zur Reinigung von Bauteilen gemäß der vorliegenden Erfindung,
- Figur 2: schematisch den Temperatur- und Druckverlauf während des Fluoridreinigungsabschnittes des in Figur 1 dargestellten Reinigungsverfahrens,

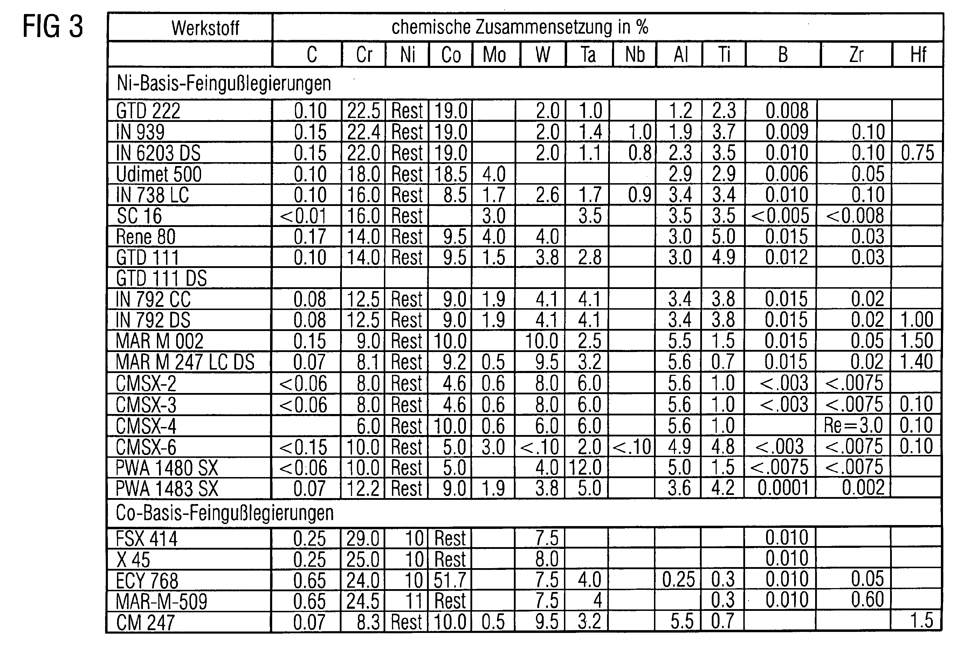

- Figur 3: eine Liste von Superlegierungen,
- Figur 4: eine Gasturbine,
- Figur 5: eine Turbinenschaufel und
- Figur 6: eine Brennkammer.

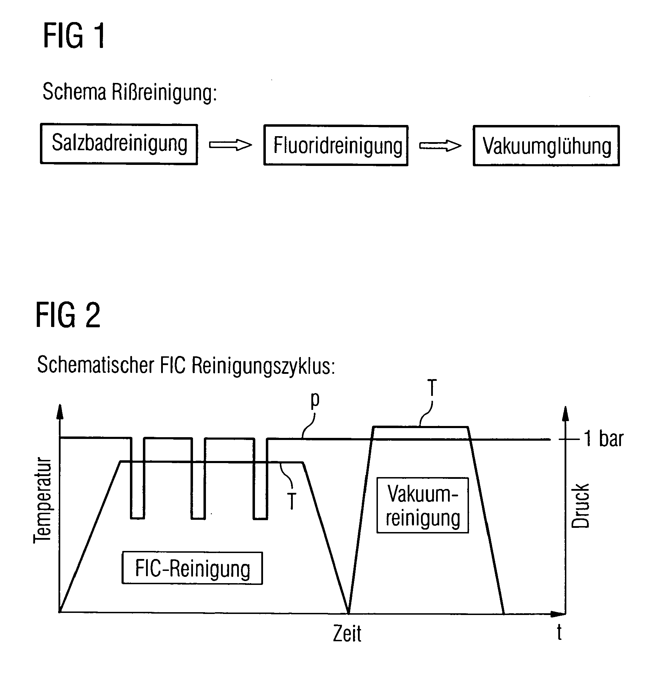

In den Figuren 1 und 2 ist schematisch ein erfindungsgemäßes Verfahren zur Reinigung von Bauteilen dargestellt, welche mit Oxiden verschmutzte Risse aufweisen. Das Verfahren ist insbesondere geeignet zur Reinigung der Lauf- und Leitschaufeln 120, 130 einer Gasturbine 100 und anderer im Betrieb stark beanspruchter Komponenten wie beispielsweise den Hitzeschildelementen 150 einer Brennkammer 110 der Gasturbine 100. Das Verfahren umfasst die drei Abschnitte einer Vorreinigung, einer Fluordionenreinigung und einer Vakuumglühung. Die Vorreinigung, die fakultativ, aber nicht zwingend notwendig ist und beispielsweise in einer Salzbadreinigung bestehen kann, dient dazu, die Oberfläche des zu reinigenden Bauteils 120, 130, 155 von oberflächlichen Oxiden und anderen Korrosionsprodukten zu befreien oder diese so zu schädigen, dass die nachfolgende Fluordionenreinigung verbessert stattfinden kann.

Nach der Vorbehandlung wird das Bauteil 120, 130, 155 einer Fluordionenreinigung (FIC) unterzogen. Während dieser FIC-Reinigung, die an sich vorbekannt ist, wird das zu reinigende Bauteil in einer Reinigungskammer einer Reinigungsgasatmosphäre bei Temperaturen in einem Bereich von 1000°C ausgesetzt. Das Reinigungsgas enthält einen Halogenwasserstoff in der Form von Fluorwasserstoff (HF), das bei den vorherrschenden Temperaturen unter der Bildung von Fluoridionen dissoziiert, welche wiederum geeignet sind, unter der Bildung von Metallfluoriden auch komplexe Oxide, welche sich in den Rissen des Bauteils gebildet haben, aufzulösen.

Bei dem erfindungsgemäßen Verfahren wird ein Reinigungsgas eingesetzt, das 18 bis 30vol% Halogenwasserstoff bzw. Fluorwasserstoff enthält, wobei das verbleibende Gas ein nicht oxidierendes und nicht korrodierendes Gas ist und insbesondere ein Gas wie beispielsweise ein Wasserstoffgas, das reduzierend auf Oxide wirkt. Die Temperatur in der Reinigungskammer liegt während der FIC-Reinigung in einem Bereich von 980°C bis 1100°C.

Die Beaufschlagung des zu reinigenden Bauteils 120, 130, 155 mit dem Reinigungsgas in der Form des HF/H₂-Gemischs erfolgt in mehreren Reinigungszyklen, die von Spülzyklen mit einem nicht oxidierenden und insbesondere reduzierend wirkenden Spülgas wie beispielsweise Wasserstoff (H₂) unterbrochen wird. Die Spülzyklen können durch Abpumpen der Reinigungskammer unterstützt werden, wobei dann vor dem nächsten Reinigungszyklus das Reinigungsgas in der Reinigungskammer nachgefüllt werden muss. Ebenso kann die Reinigung durch Abpumpen des Reinigungsgases unterbrochen werden. In dem dargestellten Ausführungsbeispiel werden vier Reinigungszyklen angewendet, die von insgesamt drei Spülzyklen unterbrochen werden, wobei am Ende des letzten Reinigungszyklus ebenfalls eine Spülung stattfindet. Die Zahl der Reinigungs- und Spülzyklen kann jedoch auch deutlich höher liegen. Vorzugsweise werden drei bis zehn Spülzyklen durchgeführt.

Die Reinigungszyklen, in denen das Bauteil mit dem Reinigungsgas beaufschlagt wird, dauern jeweils 10 bis 60 Minuten und insbesondere 40 Minuten, wobei die Reinigungszyklen gleich lang sein können. In der Zeichnung sind zwar der erste und der vierte Reinigungszyklus etwas länger als die mittleren beiden Reinigungszyklen. Dies liegt jedoch daran, dass im ersten Zyklus die Temperatur erst in dem gewünschten Bereich erhöht werden muss und im letzten Zyklus die Temperatur wieder heruntergefahren werden muss.

Im Anschluss an den letzten Spülzyklus der FIC-Reinigung wird eine Lösungsglühbehandlung durchgeführt, bei der sich Reaktionsprodukte wie beispielsweise γ'-Phasen, wie sie bei nickelbasierten Superlegierungen auftreten, auflösen.

Die Figur 2 zeigt einen beispielhaften Temperaturverlauf C und einen Druckverlauf p in einem Diagramm über die Zeit t. Ein zu reinigendes Bauteil 120, 130, 155 wird in die Reinigungskammer eingeführt, und die Temperatur T wird auf den gewünschten Bereich hochgefahren. Dabei wird das Reinigungsgas, hier ein HF/H₂-Gemisch, in die Reinigungskammer eingeleitet. In diesem Ausführungsbeispiel finden vier Reinigungszyklen statt, die von drei Spülzyklen unterbrochen werden. In diesen Spülzyklen wird das Gasgemisch auch abgepumpt, so dass während der Spülzyklen der Druck innerhalb der Kammer deutlich absinkt. Zusätzlich wird ein reduzierend wirkendes Gas wie beispielsweise Wasserstoff in die Kammer eingeleitet.

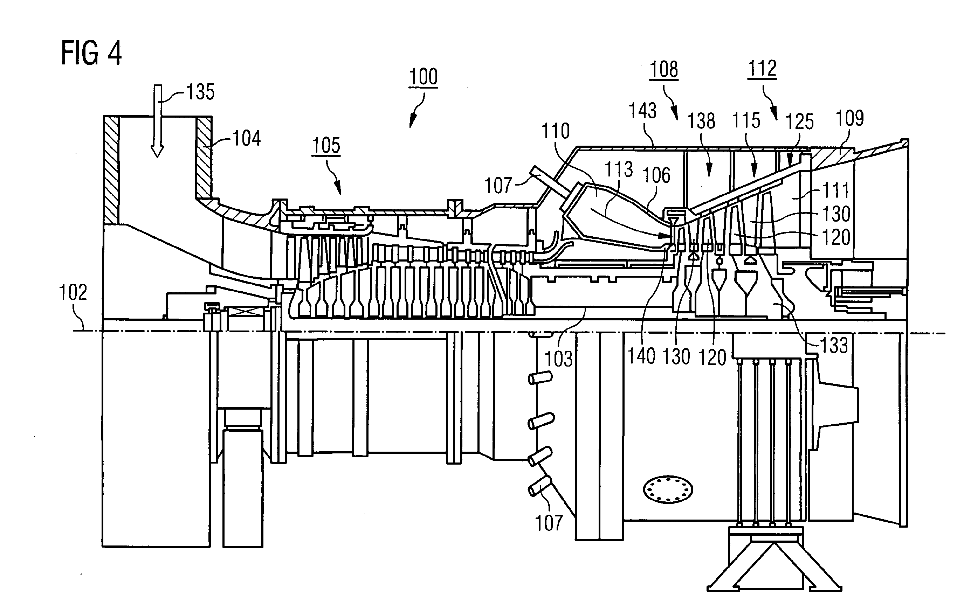

Wie bereits einleitend ausgeführt ist das erfindungsgemäße Verfahren insbesondere geeignet, Gasturbinenbauteile zu reinigen, die aus Legierungen mit einem Chromanteil von wenigstens 10 Gew% bestehen. Beispiele solcher Legierungen sind in der Tabelle 3 aufgeführt. Die Figur 4 zeigt beispielhaft eine solche Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

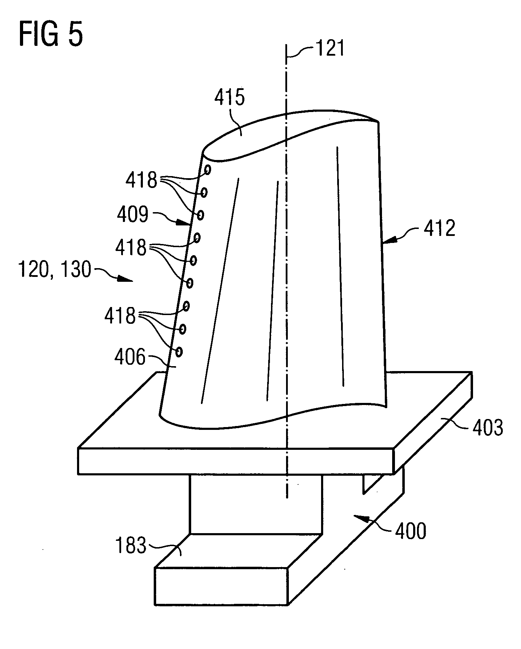

Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt oder z.B. atmosphärisches Plasmaspritzen (APS) poröse, mikro- und makrorissbehaftete Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

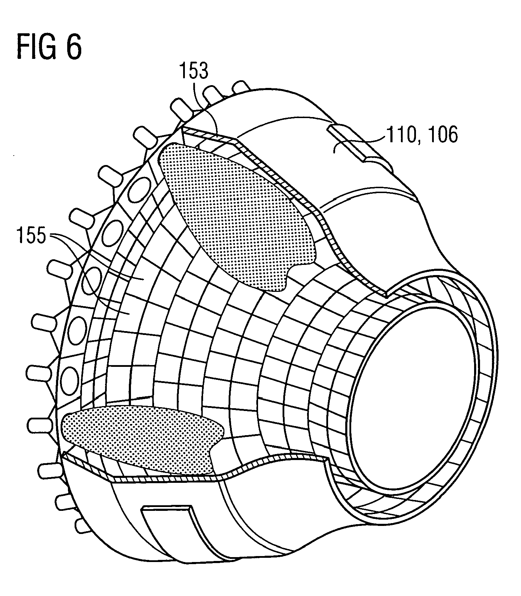

Die Figur 6 zeigt eine Brennkammer 110 einer Gasturbine 100 (Fig. 4).
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

## Patentansprüche

1. Verfahren zur Reinigung von mit Oxiden verschmutzte Risse aufweisenden Bauteilen,
insbesondere von Gasturbinenteilen,
bei dem die zu reinigenden Bauteile unter Temperatureinwirkung in einer Reinigungskammer mit einem Reinigungsgas beaufschlagt werden, das gasförmige Halogenverbindungen enthält, die unter Bildung von Halogenidionen dissoziieren,
**dadurch gekennzeichnet, dass**
ein Reinigungsgas verwendet wird, das zu 18 bis 30 Vol% einen Halogenwasserstoff enthält.

2. Verfahren nach Anspruch 1,
**dadurch gekennzeichnet, dass**
der Halogenwasserstoff in Form von Fluorwasserstoff vorliegt.

3. Verfahren nach einem der vorherigen Ansprüche,
**dadurch gekennzeichnet, dass**
das Reinigungsgas ein Gemisch aus dem Halogenwasserstoff und einem reduzierend wirkenden Gas, insbesondere Wasserstoff, enthält oder daraus besteht.

4. Verfahren nach einem der vorhergehenden Ansprüche,
**dadurch gekennzeichnet, dass**
die Risse bei einer Temperatur von 980°C bis 1100°C mit dem Reinigungsgas beaufschlagt werden.

5. Verfahren nach einem der vorherigen Ansprüche,
**dadurch gekennzeichnet, dass**
das Reinigungsgas in mehreren Reinigungszyklen angewendet wird, die von Spülzyklen unterbrochen werden,
wobei die Risse in den Spülzyklen mit einem nicht oxidierenden Spülgas beaufschlagt werden.

6. Verfahren nach Anspruch 6,
**dadurch gekennzeichnet, dass**
die Reinigungs- und Spülzyklen unmittelbar aufeinander folgen.

7. Verfahren nach Anspruch 5 oder 6,
**dadurch gekennzeichnet, dass**
drei bis zehn Spülzyklen durchgeführt werden.

8. Verfahren nach einem der Ansprüche 5 bis 7,
**dadurch gekennzeichnet, dass**
jeder Reinigungszyklus 10 bis 60 Minuten dauert.

9. Verfahren nach einem der Ansprüche 5 bis 8,
**dadurch gekennzeichnet, dass**
die Reinigungszyklen gleich lang sind.

10. Verfahren nach einem der Ansprüche 5 bis 9,
**dadurch gekennzeichnet, dass**
die Spülzyklen 2 bis 10 Minuten dauern.

11. Verfahren nach einem der Ansprüche 5 bis 10,
**dadurch gekennzeichnet, dass**
dem letzten Reinigungszyklus ein Spülzyklus folgt.

12. Verfahren nach einem der Ansprüche 5 bis 11,
**dadurch gekennzeichnet, dass**
die Reinigungskammer während der Spülzyklen abgepumpt wird.

13. Verfahren nach einem der Ansprüche 5 bis 12,
**dadurch gekennzeichnet, dass**
als Spülgas ein reduzierend wirkendes Gas, insbesondere ein Wasserstoffgas verwendet wird.

14. Verfahren nach einem der vorherigen Ansprüche,
**dadurch gekennzeichnet, dass**
das Bauteil nach der Reinigungsbehandlung im Vakuum geglüht wird.

15. Verfahren nach Anspruch 14,
**dadurch gekennzeichnet, dass**
das Glühen bei der γ'-Lösungsglühtemperatur des für das Bauteil verwendeten Werkstoffs erfolgt.

16. Verfahren nach einem der Ansprüche 14 oder 15,
**dadurch gekennzeichnet, dass**
das Glühen auf Glühtemperatur mindestens zwei Stunden dauert.

17. Verfahren nach einem der vorherigen Ansprüche,
**dadurch gekennzeichnet, dass**
der Reinigungsbehandlung eine Vorreinigung in einem Salzbad vorausgeht.

18. Verfahren nach einem der vorherigen Ansprüche,
**dadurch gekennzeichnet,**
**dass** Bauteile aus chromhaltigen Legierungen, die insbesondere einen Chromgehalt von wenigstens 10 Gew% aufweisen, gereinigt werden.

19. Verfahren nach Anspruch 18,
**dadurch gekennzeichnet,**
**dass** Bauteile aus gerichtet erstarrten Gusslegierungen, insbesondere Superlegierungen, gereinigt werden.
